# EUROPÄISCHE PATENTSCHRIFT

(11) **EP 1 631 609 B1**
(45) Veröffentlichungstag und Bekanntmachung des Hinweises auf die Patenterteilung: **17.11.2010**
(21) Anmeldenummer: 04732968.5
(22) Anmeldetag: 14.05.2004
(51) Int. Cl.: C08G 18/32, C08G 18/46, C08G 83/00

(54) **VERFAHREN ZUR HERSTELLUNG VON DENDRIMEREN ODER HYPERVERZWEIGTEN POLYURETHANEN**
METHOD FOR PRODUCING DENDRITIC OR HYPERBRANCHED POLYURETHANES
PROCEDE DE PRODUCTION DE POLYURETHANES DENDRIMERES OU HYPERRAMIFIES

(30) Priorität: 16.05.2003 DE 10322401
(43) Veröffentlichungstag der Anmeldung: 08.03.2006
(73) Patentinhaber: BASF SE, 67056 Ludwigshafen (DE)
(72) Erfinder: BRUCHMANN, Bernd, 67251 Freinsheim (DE); STUMBE, Jean-Francois, F-67200 Strasbourg (FR)
(86) Internationale Anmeldenummer: PCT/EP2004/005215
(87) Internationale Veröffentlichungsnummer: WO 2004/101624

(56) Entgegenhaltungen:
- EP-A- 0 046 088
- EP-A- 0 297 344
- EP-A- 1 026 185
- DATABASE WPI Week 200022 Derwent Publications Ltd., London, GB; AN 2000-251564 XP002301795 "A vinyl group containing dendrimer for paints and inks" & JP 2000 063513 A (TOYO INK MFG) 29. Februar 2000 (2000-02-29)

## Beschreibung

Die Erfindung betrifft Verfahren zur Herstellung von dendrimeren oder hyperverzweigten Polyurethanen, die so erhältlichen dendrimeren oder hyperverzweigten Polyurethane und deren Verwendung.

Die Herstellung von dendrimeren und hochverzweigten Polyurethanen ist an sich bekannt. Beispielsweise beschreiben Spindler und Frechet in "Macromolecules" 1993, 26, Seiten 4809 bis 4813 die Synthese und Charakterisierung von hyperverzweigten Polyurethanen, die aus verkappten Isocyanatmonomeren durch stufenweise Polymerisation erhalten werden. Als Monomer wird 3,5-Bis((benzoxicarbonyl)imino)benzylalkohol eingesetzt. Dieses Monomer, das als Phenol-verkappter Diisocyanatobenzylalkohol anzusehen ist, wird in der Umsetzung verwendet. Nachteilig an dem Verfahren ist zum einen die fehlende technische Verfügbarkeit des Ausgangs-monomers und die aufwendige und kostspielige Herstellung der Polyurethane. Zudem bringt die erforderliche Abspaltung von Phenol toxikologische und arbeitsplatzhygienische Probleme mit sich.

Ein Verfahren zur Herstellung hochfunktionalisierter Polyurethane, das mit anderen Schutzgruppen arbeitet, ist in der WO 97/02304 beschrieben. Als Isocyanatkomponente werden beispielsweise übliche Verbindungen wie Diphenylmethandiisocyanat (MDI), Toluylendiisocyanat (TDI), p-Phenylendiisocyanat, Hexamethylendiisocyanat (HDI) oder Isophorondiisocyanat (IPDI) eingesetzt. Als Polyolkomponente können Glycerin- oder Trimethylolpropen-Ketale, Hydroxyalkyloxazolidine oder auch Dialkanolamine verwendet werden. Es ist beschrieben, dass bei den Dialkanolaminen die NH-Gruppe bevorzugt reagiert, so dass auf eine Verkappung der OH-Gruppen verzichtet werden kann. Ansonsten werden zur Herstellung der Dendrimere in einem der ersten Reaktionsschritte Monomere erzeugt, die eine NCO-Gruppe und zwei geschützte OH-Gruppen aufweisen. Nach Anlagerung dieser Monomere an ein OH- oder NH-Gruppen tragendes Startermolekül und Entschützung der OH-Gruppen werden Polyurethan-Polyole erhalten, die durch divergenten (schalenförmigen) Aufbau zu dendrimeren Strukturen wachsen. Durch Modifikation dieses Reaktionsschemas lassen sich die Dendrimere auch nach der konvergenten Methode, das heißt Erzeugung der dendrimeren Äste und anschließende Ankopplung an einen Kern, herstellen. Mittels einer intermolekularen Reaktion lassen sich aus den genannten Monomeren auch hochverzweigte Polyurethane herstellen. Die Anwendung der Schutzgruppen-Chemie ist jedoch aufwendig und kostspielig.

EP-A-1 026 185 betrifft dendrimere und hochverzweigte Polyurethane, die durch Umsetzung von Diisocyanaten und/oder Polyisocyanaten mit Verbindungen mit mindestens zwei mit Isocyanaten reaktiven Gruppen erhalten werden, wobei mindestens einer der Reaktionspartner funktionelle Gruppen mit gegenüber dem anderen Reaktionspartner unterschiedlicher Reaktivität aufweist und die Reaktionsbedingungen so gewählt werden, dass bei jedem Reaktionsschritt jeweils nur bestimmte reaktive Gruppen miteinander reagieren. Es werden insbesondere Di- und/oder Polyisocyanate mit NCO-Gruppen unterschiedlicher Reaktivität eingesetzt. Beispiele dafür sind 2,4-Toluylendiisocyanat, 2,4'-Diphenylmethandiisocyanat, Triisocyanatotoluol, Isophorondiisocyanat und weitere Isocyanate. Als Verbindungen mit mindestens zwei mit Isocyanaten reaktiven Gruppen können unter anderem Aminoalkohole, Aminodiole und Aminotriole eingesetzt werden. Es ist wiederum beschrieben, dass die Reaktivität der Aminogruppe gegenüber der Hydroxylgruppe bei der Umsetzung mit Isocyanat deutlich höher ist. Als Beispiele werden Propylenglykol, Glycerin, Mercaptoethanol, Ethanolamin, Diethanolamin und auch Tris(hydroxymethyl)aminomethan genannt.

Im beschriebenen Verfahren werden Reaktivitätsunterschiede bei den Ausgangskomponenten genutzt, um definierte Strukturen über die Selektivität aufzubauen. Die nach diesem Verfahren hergestellten Polymere weisen jedoch relativ kurze Abstände zwischen den funktionellen Gruppen der Wiederholeinheiten auf, was zu Problemen bei der Kompatibilität mit Lösungsmitteln oder anderen Polymeren führen kann.

In der EP-A-1 167 413 sind mehrfunktionelle Polyisocyanat-Polyadditionsprodukte beschrieben. Zu ihrer Herstellung werden zunächst mit Isocyanatgruppen reaktive, mindestens difunktionelle Komponenten mit Di- oder Polyisocyanaten derart umgesetzt, dass im Mittel im Additionsprodukt eine Isocyanatgruppe und mehr als eine mit Isocyanatgruppen reaktive Gruppe vorliegt. Sodann wird dieses Additionsprodukt einer intermolekularen Additionsreaktion unterworfen, woran sich die Umsetzung des so erhaltenen Polyadditionsproduktes mit einer mindestens difunktionellen, mit Isocyanatgruppen reaktiven Komponente anschließt. Unter den Verbindungen mit mehr als zwei mit Isocyanatgruppen reaktiven Gruppen werden unter anderem Glycerin, Trimethylolmethan, Trimethylolethan, Trimethylolpropan, Triethanolamin, Triisopropanolamin, N-Methyldiethanolamin und N-Butyldiethanolamin aufgeführt. Als Di- oder Polyisocyanate kommen die vorstehend beschriebenen bekannten aliphatischen, cycloaliphatischen und aromatischen Isocyanate in Betracht.

Die erhaltenen Produkte weisen nicht immer eine ausreichende Verträglichkeit und Löslichkeit mit oder in Standard-Lösungsmitteln sowie mit Wasser auf.

Aufgabe der vorliegenden Erfindung ist die Bereitstellung eines einfachen und kostengünstigen Verfahrens zur Herstellung von dendrimeren und hyperverzweigten Polyurethanen, das mit leicht zugänglichen Rohstoffen und unter Verzicht des Einbaus von Schutzgruppen durchgeführt werden kann und das Produkte generiert, die eine verbesserte Verträglichkeit und Löslichkeit mit oder in Standard-Lösungsmitteln sowie mit oder in Wasser aufweisen.

Die Aufgabe wird erfindungsgemäß gelöst durch ein Verfahren zur Herstellung von dendrimeren oder hyperverzweigten Polyurethanen durch
1) Umsetzung von Di- oder Polyolen, die mindestens ein tertiäres Stickstoffatom und mindestens zwei Hydroxylgruppen mit unterschiedlicher Reaktivität gegenüber Isocyanatgruppen aufweisen, mit Di- oder Polyisocyanaten zu einem Additionsprodukt, wobei die Di- oder Polyole und Di- oder Polyisocyanate so gewählt werden, dass das Additionsprodukt im Mittel eine Isocyanatgruppe und mehr als eine Hydroxylgruppe oder eine Hydroxylgruppe und mehr als eine Isocyanatgruppe aufweist, wobei zunächst auch mit einer mindestens zwei Hydroxylgruppen oder Isocyanatgruppen enthaltenden Verbindung umgesetzt werden kann,
2) Umsetzung des Additionsproduktes aus Schritt 1) zu einem (intermolekularen) Polyadditionsprodukt durch intermolekulare Umsetzung der Hydroxylgruppen mit den Isocyanatgruppen,
3) Gegebenenfalls Umsetzung des Polyadditionsproduktes aus Schritt 2) mit einer mindestens zwei Hydroxylgruppen, Mercaptogruppen, Aminogruppen oder Isocyanatgruppen enthaltenden Verbindung.

Die Erfindung betrifft auch die nach diesem Verfahren erhältlichen dendrimeren oder hyperverzweigten Polyurethane sowie deren Verwendung als Komponente zur Herstellung von Polyadditions- oder Polykondensationspolymeren, Beschichtungen, Lacken, Überzügen, Klebstoffen, Dichtmassen, Gießelastomeren, Schaumstoffen, als Phasenvermittler, Rheologiehilfsmittel, Thixotropiermittel, Nukleierungsreagenzien oder als Wirkstoff- oder Katalysatorträger.
Es wurde erfindungsgemäße gefunden, dass der Einsatz von Di- oder Polyolen, die mindestens ein tertiäres Stickstoffatom und mindestens zwei Hydroxylgruppen mit unterschiedlicher Reaktivität gegenüber Isocyanatgruppen aufweisen, zu dendrimeren oder hyperverzweigten Polyurethanen führt, die einfach und kostengünstig herzustellen sind und eine verbesserte Verträglichkeit bzw. Löslichkeit mit oder in Standard-Lösungsmitteln sowie mit/in Wasser aufweisen. Diese Di- oder Polyole werden mit Di- oder Polyisocyanaten selektiv zu den dendrimeren oder hyperverzweigten Polyaminourethanen umgesetzt.

Dendrimere, Arborole, Starbust Polymers und hyperverzweigte (hyperbranched) Polymere sind Bezeichnungen für polymere Strukturen, die sich durch eine verzweigte Struktur und eine hohe Funktionalität auszeichnen. Diese Strukturen sind für viele Klassen von polymeren Verbindungen, beispielsweise für Polyamine, Polyamide, Polyether, Polyester, Polyphenylene oder Polysiloxane in verschiedenen Varianten beschrieben. Eine umfassende Übersicht über dieses Gebiet wird beispielsweise in E. Malmström und A. Hult, J.M.S.-Rev. Macromol. Chem. Phys., 1997, C 37(3), 555 - 579, in Dendritic Molecules, G. R. Newkome, C. N. Moorefield und F. Vögtle, Verlag Chemie, Weinheim 1996 und in Dendrimers und Dendrons, G. R. Newkome, C. N. Moorefield und F. Vögtle, Wiley-VCH Verlag, Weinheim 2001, gegeben.

Unter dendrimeren Polyaminourethanen werden im Rahmen dieser Erfindung Makromoleküle mit Aminogruppen und Urethangruppen verstanden, die strukturell und molekular einheitlich sind und, ausgehend von einem Kernmolekül, verzweigte Molekülketten, so genannte Dendrons, aufweisen. Im Rahmen dieser Erfindung fallen auch die verzweigten Molekülketten (Dendrons) selbst unter den Begriff der Dendrimere.

Unter hyperverzweigten Polyaminourethanen werden im Rahmen dieser Erfindung unvernetzte Makromoleküle mit Aminogruppen und Urethangruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch: P. J. Flory, J. Am. Chem. Soc. 1952, 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, 10 bis 99%, bevorzugt 20 bis 95%, besonders bevorzugt 20 bis 90 % beträgt.
Unter "dendrimer" wird im Zusammenhang mit der vorliegenden Erfindung verstanden, dass der Degree of Branching 99,0 bis 100 % beträgt. Zur Definition des "Degree of Branching" siehe H. Frey et al., Acta Polym. 1997, 48, 30.

Im erfindungsgemäßen Verfahren wird zunächst in Schritt 1) ein Additionsprodukt hergestellt, das im Mittel eine Isocyanatgruppe und mehr als eine Hydroxylgruppe oder eine Hydroxylgruppe und mehr als eine Isocyanatgruppe aufweist. Vorzugsweise weist das Additionsprodukt eine Isocyanatgruppe und zwei bis vier, besonders bevorzugt 2 oder 3, insbesondere zwei Hydroxylgruppen oder eine Hydroxylgruppe und zwei bis vier, besonders bevorzugt zwei oder drei, insbesondere zwei Isocyanatgruppen auf. Dieses Additionsprodukt wird durch intermolekulare Umsetzung der Hydroxylgruppen mit den Isocyanatgruppen zu einem intermolekularen Polyadditionsprodukt in Schritt 2) umgesetzt.

In einem nachfolgenden optionalen Schritt 3) kann das so erhaltene Polyadditionsprodukt noch mit einer mindestens zwei Hydroxylgruppen oder Isocyanatgruppen enthaltenden Verbindung umgesetzt werden. Dieser dritte Reaktionsschritt entspricht gerade einer konvergenten Synthese. Der zweite und dritte Schritt können beispielsweise wie in EP-A-1 167 413 und EP-A-1 026 185 beschrieben durchgeführt werden.

In Schritt 1) werden Di- oder Polyole eingesetzt, die mindestens ein tertiäres Stickstoffatom und mindestens zwei Hydroxylgruppen mit unterschiedlicher Reaktivität gegenüber Isocyanatgruppen aufweisen. Die unterschiedliche Reaktivität gegenüber Isocyanatgruppen zeigt sich beispielsweise darin, dass die Umsetzung mit Isocyanatgruppen zweistufig so gesteuert werden kann, dass zunächst nur die Hydroxylgruppen mit höherer Reaktivität umgesetzt werden und erst im nachfolgenden Schritt die Hydroxylgruppen mit geringerer Reaktivität. Entsprechend werden vorzugsweise in Schritt 1) nur oder überwiegend die Hydroxylgruppen der Di- oder Polyole mit der höheren Reaktivität gegenüber Isocyanatgruppen mit den Isocyanatgruppen umgesetzt und in Schritt 2) die Hydroxylgruppen der Di- oder Polyole mit der niedrigeren Reaktivität gegenüber Isocyanatgruppen umgesetzt. Der Ausdruck "überwiegend" beschreibt, dass mindestens 60 %, vorzugsweise mindestens 70 %, insbesondere mindestens 80 % der Hydroxylgruppen der Di- oder Polyole mit der höheren Reaktivität in Schritt 1) umgesetzt werden.
Die in Schritt 1) eingesetzten Di- oder Polyole weisen vorzugsweise 2 bis 5, besonders bevorzugt 2 bis 4, insbesondere 2 oder 3 Hydroxylgruppen auf, wobei die Hydroxylgruppen mindestens zwei unterschiedliche Reaktivitäten gegenüber NCO-Gruppen aufweisen. In einer Verbindung mit drei Hydroxylgruppen können damit zwei Hydroxylgruppen eine identische oder vergleichbare Reaktivität aufweisen. Die Reaktivitätsunterschiede sollten so groß sein, dass sich in der Praxis eine zweistufige selektive Umsetzung der Hydroxylgruppen steuern lässt.

Die Di- oder Polyole weisen mindestens ein tertiäres Stickstoffatom auf. Vorzugsweise liegen 1 bis 3, besonders bevorzugt 1 oder 2, insbesondere 1 tertiäres Stickstoffatom vor.

Vorzugsweise werden die in Schritt 1) eingesetzten Di- oder Polyole durch Michael-Addition von mindestens eine primäre oder sekundäre Aminogruppe und mindestens eine Hydroxylgruppe aufweisenden Verbindungen an ethylenisch ungesättigte Verbindungen, die mindestens eine Hydroxylgruppe aufweisen, erhalten. Als ethylenisch ungesättigte Verbindungen kommen alle entsprechenden Verbindungen in Betracht, die eine Michael-Addition mit den Aminoalkoholen eingehen können. Dem Fachmann sind entsprechende Verbindungen bekannt. Beispielsweise kann die ethylenisch ungesättigte Verbindung ausgewählt sein aus (Meth)acrylaten von Diolen oder Polyolen, oder aus Vinylalkoholen oder Allylalkoholen. Besonders bevorzugt ist die ethylenisch ungesättigte Verbindung ausgewählt aus (Meth)acrylaten von C_{2 bis 20}-Diolen, besonders bevorzugt C_{2 bis 12}-Diolen, insbesondere C_{2 bis 6}-Diolen. Die Diolkomponente kann dabei linear oder verzweigt sein. Vorzugsweise handelt es sich um primäre oder sekundäre Diole oder um primär/sekundär gemischte Diole.

Die in der Michael-Addition eingesetzten, mindestens eine primäre oder sekundäre Aminogruppe und mindestens eine Hydroxylgruppe aufweisenden Verbindungen enthalten vorzugsweise 1 bis 3, besonders bevorzugt 1 oder 2, insbesondere eine primäre oder sekundäre Aminogruppe. Sie weisen ferner vorzugsweise mindestens eine, vorzugsweise 1 bis 3, insbesondere 1 oder 2 Hydroxylgruppen auf. Es handelt sich insbesondere um aliphatische, aromatische oder aromatisch-aliphatische Aminoalkanole, die linear oder verzweigt sein können. Sie weisen vorzugsweise 2 bis 50 Kohlenstoffatome, insbesondere 2 bis 20 Kohlenstoffatome auf.

Geeignete Michael-Additionsprodukte sind beispielsweise auch in DE-A-198 05 136 beschrieben. Für geeignete Umsetzungsbedingungen kann ebenfalls auf diese Schrift verwiesen werden.

Geeignete Ausgangsstoffe für die Herstellung dieser Aminoalkohole sind zum Beispiel aliphatische Diamine, Triamine oder Alkanolamine mit primären und/oder sekundären NH- bzw. primären, sekundären oder tertiären OH-Gruppen. Zu nennen sind zum Beispiel Ethylendiamin, Propylendiamin, Butylendiamin, Hexamethylendiamin, Isophorondiamin, Toluylendiamin, Isopropanolamin, Butanolamin, Pentanolamin, Hexanolamin oder längerkettige Alkanolamine, Diethanolamin, Dipropanolamin, Dibutanolamin, Diisopropanolamin, Tris(hydroxymethyl)aminomethan oder Tris(hydroxyethyl)amino-methan. Diese Monomere werden mit aktivierte Doppelbindungen enthaltenden Molekülen, zum Beispiel mit Acrylsäurederivaten oder Vinylverbindungen, zu den di- oder mehrfunktionellen Aminoalkoholen umgesetzt.

Gemäß einer Ausführungsform ist die ethylenisch ungesättigte Verbindung ein (Meth)acrylat eines aliphatischen Diols, das mit einem aliphatischen Aminoalkanol umgesetzt wird, der eine primäre oder sekundäre Aminogruppe und eine oder zwei Hydroxylgruppen aufweist.

In einer bevorzugten Ausführungsform werden dabei Aminoalkohole erzeugt, die intramolekular sowohl tertiäre Aminogruppen als auch primäre, sekundäre oder tertiäre OH-Gruppen aufweisen.

Besonders bevorzugt sind dabei Verbindungen mit einer tertiären Aminogruppe und gegenüber NCO-Gruppen unterschiedlich reaktiven OH-Gruppen, zum Beispiel Produkte mit einer primären und einer sekundären OH-Gruppe, einer primären und einer tertiären OH-Gruppe, einer primären und mindestens zwei sekundären OH-Gruppen, einer primären und mindestens zwei tertiären OH-Gruppen, einer sekundären und mindestens zwei primären OH-Gruppen oder einer tertiären und mindestens zwei primären OH-Gruppen.

Ganz besonders bevorzugt sind Verbindungen mit einer tertiären Aminogruppe und einer primären und einer sekundären Hydroxyl-Gruppe, einer primären und mindestens zwei sekundären Hydroxyl-Gruppen oder einer sekundären und mindestens zwei primären Hydroxyl-Gruppen.

Weiterhin sind auch Mischungen der genannten Verbindungen einsetzbar.

Die Aminoalkohole werden anschließend mit Di- oder Polyisocyanaten zu den entsprechenden dendrimeren oder hyperverzweigten Strukturen umgesetzt.

Als Di- und Polyisocyanate kommen die aus dem Stand der Technik bekannten aliphatischen, cycloaliphatischen und aromatischen Isocyanate in Frage. Geeignete Di- oder Polyisocyanate sind beispielsweise in EP-A-1 167 413, EP-A-1 026 185 sowie WO 97/02304 beschrieben.

Bevorzugt Di- oder Polyisocyanate sind 4,4'-Diphenylmethandiisocyanat, die Mischungen aus monomeren Diphenylmethandiisocyanaten und oligomeren Diphenylmethandiisocyanaten (Polymer-MDI), Tetra-methylendiisocyanat, Tetramethylendiisocyanat-Trimere, Hexamethylendiisocyanat, Hexamethylendiisocyanat-Trimere, Isophorondiisocyanat-Trimer, 4,4'-Methylenbis(cyclohexyl)-diisocyanat, Xylylendiisocyanat, Tetramethylxylylendiisocyanat, Dodecyldiisocyanat, Lysinalkylesterdiisocyanat, wobei Alkyl für C₁ bis C₁₀ steht, 2,2,4- oder 2,4,4-Trimethyl-1,6-hexamethylen-diisocyanat, 1,4-Diisocyanatocyclohexan oder 4-Isocyanatomethyl-1,8-octamethylendiisocyanat.

Es ist erfindungsgemäß möglich, Di- oder Polyisocyanate einzusetzen, in denen die Isocyanatgruppen gleiche oder unterschiedliche Reaktivitäten aufweisen.

Besonders bevorzugt sind Di- oder Polyisocyanate mit NCO-Gruppen unterschiedlicher Reaktivität, wie 2,4-Toluylendiisocyanat (2,4-TDI), 2,4'-Diphenylmethandiisocyanat (2,4'-MDI), Triisocyanatotoluol, Isophorondiisocyanat (IPDI), 2-Butyl-2-ethylpentamethylendiisocyanat, 2-Isocyanatopropylcyclohexylisocyanat, 3(4)-Isocyanatomethyl-1-methylcyclohexyl-isocyanat, 1,4-Diisocyanato-4-methylpentan, 2,4'-Methylenbis(cyclohexyl)diisocyanat und 4-Methyl-cyclohexan-1,3-diisocyanat (H-TDI).

Weiterhin sind Isocyanate besonders bevorzugt, deren NCO-Gruppen zunächst gleich reaktiv sind, bei denen sich jedoch durch Erstaddition eines Alkohols an einer NCO-Gruppe ein Reaktivitätsabfall bei der zweiten NCO-Gruppe induzieren lässt. Beispiele dafür sind Isocyanate, deren NCO-Gruppen über ein delokalisiertes Elektronensystem gekoppelt sind, zum Beispiel 1,3- und 1,4-Phenylendiisocyanat, 1,5-Naphthylendiisocyana, Tolidindiisocyanat oder 2,6-Toluylendiisocyanat.

Weiterhin können beispielsweise Oligo- oder Polyisocyanate verwendet werden, die sich aus den genannten Di- oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturenherstellen lassen.
Selbstverständlich können auch Mischungen der genannten Isocyanate verwendet werden.

In Schritt 1) werden die Di- oder Polyole und Di- oder Polyisocyanate so gewählt, dass das Additionsprodukt im Mittel eine Isocyanatgruppe und mehr als eine Hydroxylgruppe oder eine Hydroxylgruppe und mehr als eine Isocyanatgruppe aufweist. Beim Einsatz gemischter Di- oder Polyole bzw. gemischter Di- oder Polyisocyanate werden Produktgemische erhalten. Hierauf bezieht sich die Angabe "im Mittel". Es werden sowohl Mengen als auch Funktionalitäten der Di- oder Polyole und Di- oder Polyisocyanate entsprechend dieser Anforderungen ausgewählt. Eine entsprechende Auswahl ist dem Fachmann bekannt. Vorzugsweise werden in Schritt 1) Diole mit Polyisocyanaten oder Polyole mit Diisocyanaten umgesetzt.

In Schritt 2) des erfindungsgemäßen Verfahrens wird das Additionsprodukt aus Schritt 1) zu einem Polyadditionsprodukt durch intermolekulare Umsetzung der Hydroxylgruppen mit den Isocyanatgruppen weiter umgesetzt.

Alternativ kann auch zunächst mit einer mindestens zwei Hydroxylgruppen oder Isocyanatgruppen enthaltenden Verbindung (Startermolekül) umgesetzt werden. Wird zunächst mit dem mindestens zwei Hydroxylgruppen, Mercapto-, Amino- oder Isocyanatgruppen enthaltenden Startermolekül umgesetzt, so werden bei stufenweiser Herstellung dendrimere Polyurethane erhalten. Wird auf die Umsetzung mit der Starterverbindung verzichtet, werden hyperverzweigte Polyurethane erhalten.

Es ist jedoch auch möglich, in einem Schritt 3) das Polyadditionsprodukt aus Schritt 2) mit einer mindestens zwei Hydroxylgruppen, Mercapto-, Amino- oder Isocyanatgruppen enthaltenden Verbindung (Starter) umzusetzen. Diese Variante entspricht der konvergenten Herstellung von Dendrimeren, wobei in Schritt 2) gerade nicht anfänglich mit einer entsprechenden Starterverbindung umgesetzt wurde.

Um bei der Herstellung der dendrimeren Polyaminourethane definierte Strukturen zu erhalten, ist es notwendig, jeweils mindestens so viele Monomere zuzusetzen, dass jede freie funktionelle Gruppe des Polymeren abreagieren kann. Zu Beginn der Reaktion wird zumeist ein mehrfunktionelles Molekül, das als Startmolekül oder Initiatorkern bezeichnet wird, vorgelegt, an dessen funktionelle Gruppen je ein mit dieser funktionellen Gruppe reaktives Molekül angelagert wird. Danach erfolgt, falls erforderlich, die Abtrennung der nicht umgesetzten Monomere und eine Reinigung des Zwischenproduktes. Danach wird an jede freie funktionelle Gruppe des Zwischenproduktes wiederum je ein mehrfunktionelles Monomer angelagert, danach, soweit erforderlich, die Abtrennung der überschüssigen Monomeren und eine Reinigung durchgeführt, und so weiter verfahren, bis das gewünschte Molekulargewicht erreicht ist bzw. aus sterischen Gründen eine Anlagerung von weiteren Monomeren nicht mehr möglich ist. Die einzelnen Zwischenstufen werden auch als Generationen bezeichnet, wobei das durch Anlagerung von Monomeren an das Startmolekül entstandene Zwischenprodukt als erste Generation, das nächste Zwischenprodukt als zweite Generation, und so fort, bezeichnet wird. Auf Grund der unterschiedlichen Reaktivität der funktionellen Gruppen der eingesetzten Monomere ist gewährleistet, dass jeweils die reaktivsten funktionellen Gruppen mit den Endgruppen der Dendrimerketten reagieren und die weniger reaktiven funktionellen Gruppen der Monomere die funktionellen Endgruppen der nächsten Generation der dendrimeren Polyaminourethane bilden.

In einer bevorzugten Ausführungsform der Erfindung erfolgt die Herstellung der dendrimeren Polyaminourethane, indem man 2, 3 oder 4 Mol eines Diisocyanates mit einem Mol eines di-, tri- oder tetrafunktionellen Startermoleküls, das kann ein di-, tri- oder tetrafunktioneller Alkohol oder auch Polyaminoalkohol sein, zur ersten Generation des dendrimeren Polyaminourethans, Isocyanat-terminiert, umsetzt.
Im nächsten Reaktionsschritt reagieren die freien Isocyanatgruppen der ersten Generation selektiv mit der reaktiveren OH-Gruppe des zugesetzten Aminoalkohols zur zweiten Dendrimergeneration, OH-terminiert. Diese OH-Gruppen werden wiederum, wie bei der Herstellung der ersten Generation des dendrimeren Polyaminourethans, mit dem Diisocyanat umgesetzt, und so fort. Auf diese Weise können dendrimere Polyaminourethane erzeugt werden, die bei jeder Generation ihre Funktionalität verdoppeln. Die Funktionalität kann dabei entweder durch OH- oder NCO-Gruppen bestimmt sein. Diese Methode des schalenförmigen Aufbaus des Dendrimer-Moleküls wird auch "Divergente Methode" genannt.
Ebenso ist es möglich, Dendrimere nach der sogenannten "Konvergenten Methode" aufzubauen: hier werden zunächst definiert Dendimer-Arme, die Dendrons, aufgebaut, die im letzten Reaktionsschritt an das Kern- oder Startermolekül angekoppelt werden.

Die Umsetzung kann in Substanz oder in Lösungsmitteln ohne oder in Anwesenheit eines Urethanbildungskatalysators durchgeführt werden. Zwischen den Reaktionsstufen kann, soweit erforderlich, eine Abtrennung überschüssiger Monomere und/oder ein Reinigungsschritt erfolgen.
Die Synthese eines hyperverzweigten Polyaminourethans erfolgt beispielsweise durch Addititon einer reaktiven Doppelbindungen enthaltenden Substanz an ein Dialkanolamin via Michael-Addition. Als Beispiel sei hier die Reaktion von 2-Hydroxyethylacrylat an Diisopropanolamin genannt. Es entsteht im ersten Reaktionsschritt ein Aminoalkohol mit tertiärer Aminogruppe, zwei sekundären (langsamen) und einer primären (schnellen)OH-Gruppe. Dieses Molekül wird dann mit Diisocyanat gemäß Schema 1 zu einem AB₂-Molekül umgesetzt, das dann intermolekular zum hyperverzweigten Polyaminourethan, OH-terminiert, weiterreagiert.

Schema 1: Syntheseschema eines OH-terminierten hyperverzweigten Polyaminourethans

Die Polyadditionsreaktion kann zu sehr hochmolekularen Strukturen geführt werden.
Die fokale (d. h. endständige)NCO-Gruppe kann nach Erreichen des gewünschten Molekulargewichts entweder durch Zugabe einer monofunktionellen Verbindung, z. B. durch Zugabe des Aminoalkohols oder durch ein Monoamin oder einen Monoalkohol gestoppt werden.
Weiterhin ist auch die Zugabe einer di- oder mehrfunktionellen OH- und/oder NH-Gruppen enthaltenden Verbindung möglich, hier addieren sich dann gemäß einer "Konvergenten Methode" die hyperverzweigten Polymerarme an die mehrfunktionelle 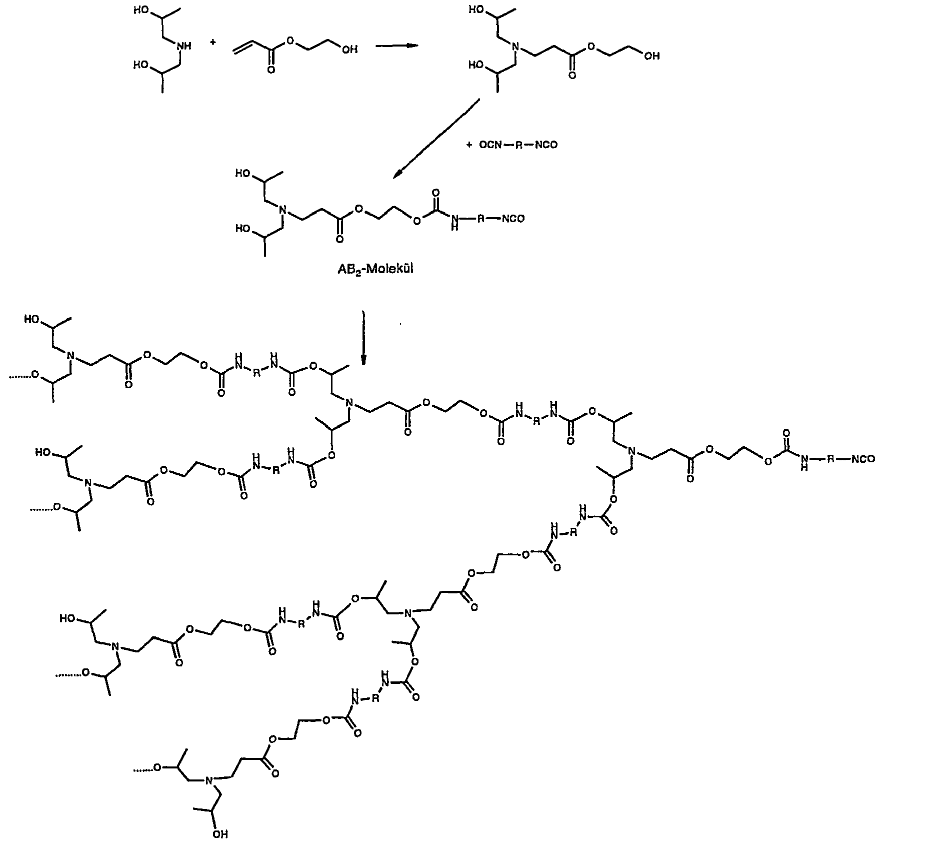 Verbindung und die Molmasse erhöht sich deutlich. Ebenso lassen sich OH-terminierte hyperverzweigte Produkte erzeugen, indem zum Beispiel zwei aktivierte Doppelbindungen enthaltende Moleküle an ein primäres Amin addiert werden. Schema 2 zeigt die Herstellung einer solchen Spezies anhand der Reaktion von Ethanolamin mit Hydroxypropylacrylat.

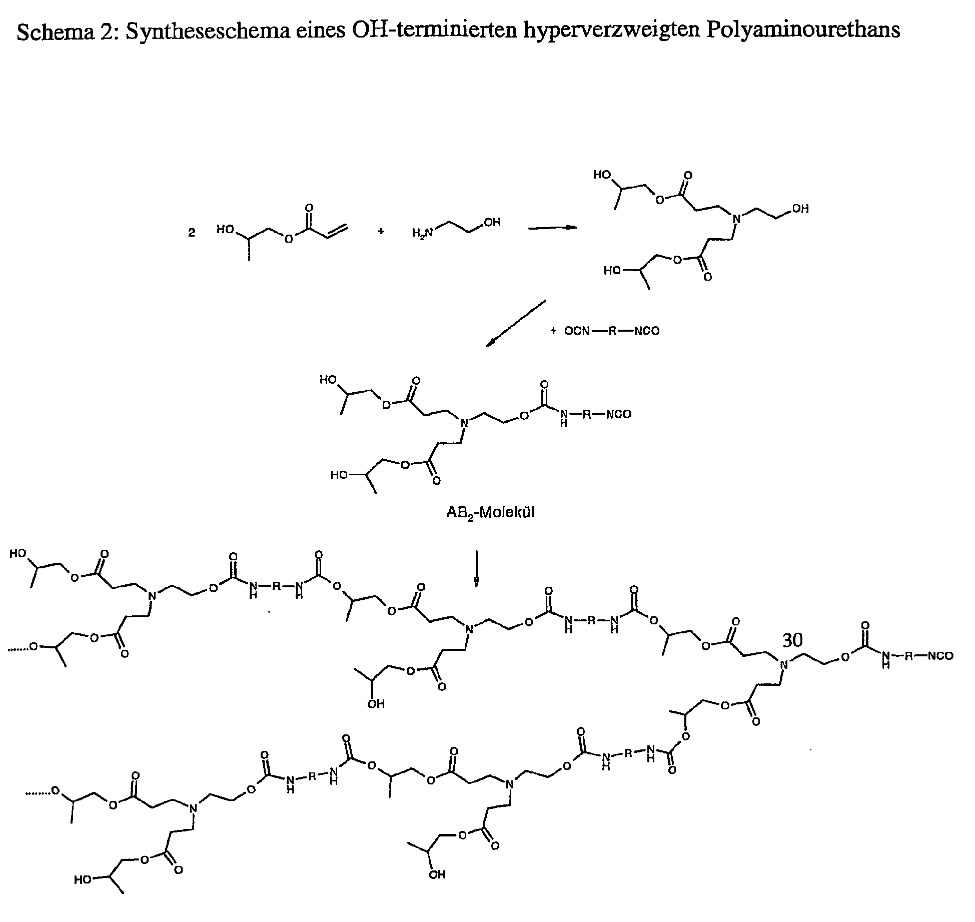

Umgekehrt lassen sich analog auch hyperverzweigte Polyisocyanate erzeugen, indem z. B. Diethanolamin mit 2-Hydroxypropylacrylat umgesetzt wird. Es entsteht ein Aminoalkohol-Molekül mit zwei primären und einer sekundären OH-Gruppe. Setzt man ein Mol dieses Produktes mit zwei Mol Diisocyanat um, erhält man einen A₂B-Baustein, der dann zu einem hyperverzweigten Polyisocyanat reagiert (Schema 3).

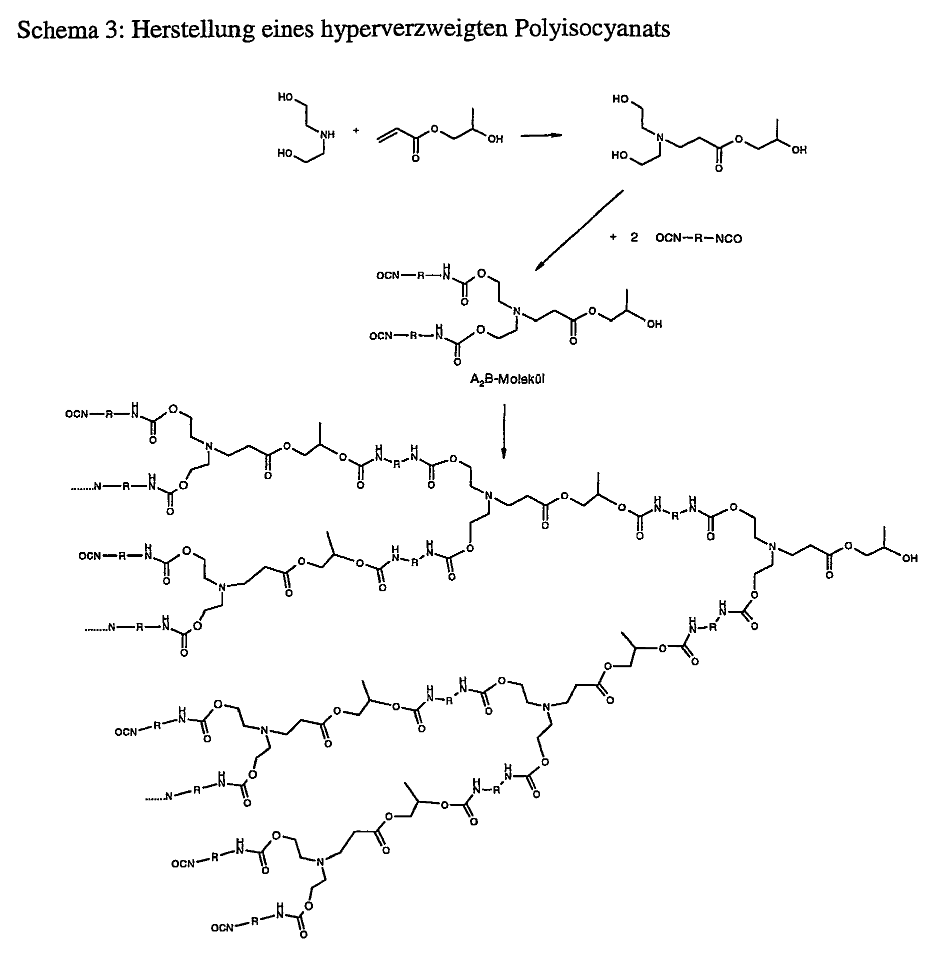

In analoger Weise können auch drei- und höherfunktionelle Isocyanate sowie auch Verbindungen mit vier oder mehr mit OH-funktionellen Gruppen umgesetzt werden.

Die fokale, endständige OH-Gruppe lässt man nach Erreichen des gewünschten Molekulargewichts entweder durch Zugabe des in der Reaktion verwendeten Diisocyanats oder auch durch Zugabe einer monofunktionellen Verbindung, z. B. eines Monoisocyanats oder eines Derivates einer organischen Carbonsäure, z. B. eines Säurehalogenids oder eines Anhydrids, abreagieren.
Alternativ kann die Reaktion auch durch Zugabe eines anderen Diisocyanats oder eines Disäurederivats gestoppt werden. Weiterhin ist auch die Zugabe einer höherfunlctionellen NCO- oder Säurederivatgruppen enthaltenden Verbindung möglich. Hier addieren sich dann gemäß einer "Konvergenten Methode" die hyperverzweigten Polmerarme an die mehrfunktionelle Verbindung, und die Molmasse erhöht sich deutlich.

Die Erfindung betrifft auch die nach dem erfindungsgemäßen Verfahren erhältlichen dendrimeren oder hyperverzweigten Polyurethane. Diese dendrimeren oder hyperverzweigten Polyurethane weisen vorzugsweise mindestens 3 bis 100, besonders bevorzugt mindestens 3 bis 50, insbesondere mindestens 3 bis 20 endständige Hydroxyl- und/oder Isocyanatgruppen auf. Ihr Molekulargewicht beträgt vorzugsweise 200 bis 100000, besonders bevorzugt 500 bis 50000 (Zahlenmittel).

Falls erforderlich, lassen sich die funktionellen Gruppen der dendrimeren oder der hochverzweigten Polyaminourethane modifizieren oder inertisieren. So lassen sich NCOterminierte Polymere beispielsweise mit Fettalkoholen, Fettaminen oder Doppelbindungen enthaltenden Monoalkoholen, wie Hydroxyethylycrylat, Hydroxyethylmethacrylat, Hydroxybutylacrylat, Vinylalkohol oder Allylalkohol ganz oder teilweise umsetzen. Weiterhin lassen sich die Isocyanatgruppen auch durch Verkappungsmittel nach dem Stand der Technik reversibel blockieren. Zu üblichen Verkappungsmitteln für NCO-Gruppen zählen beispielsweise Phenole, Imidazole, Pyrazole, Pyrazolinone, Oxime, Diketopiperazine, Caprolactam, Malonsäureester oder Verbindungen, wie sie in den Veröffentlichungen von Z. W. Wicks, Prog. Org. Coat. 3 (1975) 73 - 99 und Prog. Org. Coat. 9 (1981), 3 - 28 sowie in Houben-Weyl, Methoden der Organischen Chemie, Bd. XIV/2, Seite 61 ff., Georg Thieme Verlag, Stuttgart 1963 genannt sind.

Hydroxylterminierte Polymere lassen sich beispielsweise durch Umsetzung mit Monocarbonsäuren, beispielsweise Fettsäuren, oder Monoisocyanaten inertisieren und/oder durch Acrylsäuren funktionalisieren. Durch Addition von Alkylenoxiden, wie Ethylenoxid, Propylenoxid und/oder Butylenoxid lassen sie sich kettenverlängern.

Durch das Einbringen von CH-aciden Komponenten, z. B. von anorganischen oder organischen Protonensäuren, lassen sich die Polymere wasserlöslich oder wasserdispergierbar einstellen.

Die tertiären Aminogruppen der Verbindungen lassen sich gegebenenfalls durch Alkylierungsmittel, wie Dimethylsulfat, Diethylsulfat, Methyliodid, Methylbromid oder Benzylchlorid quaternisieren und damit permanent kationisch ausrüsten.

Die Umsetzung kann dabei jeweils ohne Lösungsmittel, vorzugsweise jedoch in Lösung erfolgen. Als Lösungsmittel sind alle bei Umsetzungstemperatur flüssigen, gegenüber den Monomeren und den Endprodukten inerten Verbindungen geeignet.

Der Einsatz der erfindungsgemäßen dendrimeren und hochverzweigten Polyaminourethane erfolgt beispielsweise als Vernetzer für Polyurethansysteme oder als Baustein für andere Polyadditions- oder Polykondensationspolymere. Weitere Anwendungsmöglichkeiten sind in ihrem Einsatz als Phasenvermittler, Rheologiehilfsmittel, Thixotropiermittel, Nuldeierungsreagenzien oder als Wirkstoff- oder Katalysatorträger zu sehen.

Das erfindungsgemäße Verfahren erlaubt es, dendrimere und hochverzweigte Polyminourethane aus gut zugänglichen Rohstoffen auf einfachem Wege, insbesondere unter Verzicht auf die aufwendige Einführung von Schutzgruppen, herzustellen.

Das erfindungsgemäße Verfahren soll an den folgenden Beispielen näher erläutert werden.

### Beispiele 1a-1d: Herstellung der Aminoalkohole durch Michael-Addition

In einem Reaktionsgefäß mit Rührer, Tropftrichter mit Druckausgleich und Gaseinleitrohr wird der Aminoalkohol unter Einleitung von trockenem Stickstoff vorgelegt und auf 50°C erwärmt. Bei dieser Temperatur wird nun die äquivalente Menge des Acrylats (siehe Tabelle 1) langsam zugegeben. Nach beendeter Zugabe wird die Reaktionsmischung noch 3 h bei 50°C gerührt. Das Reaktionsprodukt wird anschliessend auf Raumtemperatur abgekühlt und unter trockenem Stickstoff gelagert.

**Tabelle 1: Aminoalkohole**

| Beispiel-Nr. | Aminoalkohol | Acrylat | Molverhältnis |
|---|---|---|---|
| 1a | Diisopropanolamin (DIPA) | 2-Hydroxyethylacrylat (HEA) | 1:1 |
| 1b | DIPA | 4-Hydroxybutylacrylat (HBA) | 1:1 |
| 1c | Diethanolamin (DEA) | 2-Hydroxypropylacrylat (HPA) | 1:1 |
| 1d | Ethanolamin | HPA | 1:2 |

### Beispiele 2a - 2i: Hyperverzweigte Polyaminourethane, OH-terminiert

In einem Reaktionsgefäß mit Rührer, Tropftrichter mit Druckausgleich und Gaseinleitrohr wird der Aminoalkohol aus Tabelle 1 unter Einleitung von trockenem Stickstoff vorgelegt und mit trockenem Methylethylketon (MEK) versetzt. Die Menge des Lösungsmittels wird dabei so gewählt, daß nach Zugabe des Isocyanats eine 30%ige Lösung des Reaktionsgemisches in MEK resultiert. Die Lösung aus Aminoalkohol in MEK wird nun auf 0°C abgekühlt, die äquivalente Menge des Isocyanats (siehe Tabelle 2) innerhalb von 45 min zugegeben und die Mischung anschliessend nochmals 30 min bei 0°C gerührt. Dann wird die Temperatur auf den in Tabelle 2 angegebenen Wert erhöht, gegebenenfalls Dibutylzinn-dilaurat (DBTL, siehe Tabelle 2) zugesetzt und die Reaktion über den in Tabelle 2 angegebenen Zeitraum durchgeführt. Zur Beendigung der Reaktion wird eine überschüssige Menge an Ethanol zugegeben, um verbeibende NCO-Gruppen zu neutralisieren. Anschliessend werden die Lösungsmittel am Rotationsverdampfer im Vakuum bei 80°C entfernt. Die GPC-Analytik wurde mit Dimethylacetamid als mobiler Phase und Polymethylmethacrylat als Standard durchgeführt.

**Tabelle 2: Hyperverzweigte Polyaminourethane, OH-terminiert**

| Beispiel Nr. | Aminoalkohol nach Tabelle 1 | Isocyanat | Molverhältnis | Reaktions-temperatur (°C) | DBTL (ppm) | Reaktiondauer (h) | Molekulargewicht Mn (GPC) | Molekulargewicht Mw (GPC) |
|---|---|---|---|---|---|---|---|---|
| 2a | 1a | TDI | 1:1 | 50 | - | 0,5 | 3757 | 8856 |
| 2b | 1a | IPDI | 1:1 | 80 | - | 20 | 5715 | 24850 |
| 2c | 1b | TDI | 1:1 | 50 | 200 | 8 | 7255 | 47035 |
| 2d | 1b | IPDI | 1:1 | 80 | 200 | 10 | 4944 | 14833 |
| 2e | 1b | HDI | 1:1 | 80 | 200 | 10 | 8135 | 73156 |
| 2f | 1b | HDI | 1:1 | 80 | 200 | 2 | 3785 | 9615 |
| 2g | 1b | IPDI | 1:1 | 80 | 200 | 4 | 2771 | 5199 |
| 2h | 1b | TDI | 1:1 | 80 | - | 2 | 4630 | 13245 |
| 2i | 1d | TDI | 1:1 | 50 | - | 1 | 3671 | 7991 |

### Beispiel 3: Hyperverzweigtes Polyaminourethan, NCO-terminiert

In einem Reaktionsgefäß mit Rührer, Tropftrichter mit Druckausgleich und Gaseinleitrohr werden 70g Aminoalkohol 1c aus Tabelle 1 unter Einleitung von trockenem Stickstoff vorgelegt und mit 470g trockenem Methylethylketon (MEK) versetzt. Die Lösung wird nun auf 0°C abgekühlt, 132,3g Isophorondiisocyanat innerhalb von 45 min zugegeben und die Mischung nochmals 30 min bei 0°C gerührt. Dann wird die Temperatur auf 70°C erhöht, und die Mischung 20 h gerührt. Zur Beendigung der Reaktion werden 1 g Basonat^{®} HI 100 zugegeben und nochmals 1 h bei 70°C weitergerührt. Anschliessend wird das Lösungsmittel am Rotationsverdampfer im Vakuum bei 80°C entfernt.

Nach GPC-Analytik mit Dimethylacetamid als mobiler Phase und Polymethylmethacrylat als Standard werden folgende mittlere Molekulargewichte erhalten:
Mn = 4280, Mw = 27000.

### Isocyanate, Abkürzungen:

TDI: 2,4-Toluylendiisocyanat
IPDI: Isophorondiisocyanat
HDI: Hexamethylendiisocyanat
Basonat^{®} HI 100 (BASF AG): Polyisocyanat auf Basis HDI, mittlere Funktionalität = 3,7

## Patentansprüche

1. Verfahren zur Herstellung von dendrimeren oder hyperverzweigten Polyurethanen durch
1) Umsetzung von Di- oder Polyolen, die mindestens ein tertiäres Stickstoffatom und mindestens zwei Hydroxylgruppen mit unterschiedlicher Reaktivität gegenüber Isocyanatgruppen aufweisen, mit Di- oder Polyisocyanaten zu einem Additionsprodukt, wobei die Di- oder Polyole und Di- oder Polyisocyanate so gewählt werden, dass das Additionsprodukt im Mittel eine Isocyanatgruppe und mehr als eine Hydroxylgruppe oder eine Hydroxylgruppe und mehr als eine Isocyanatgruppe aufweist,
2) Umsetzung des Additionsproduktes aus Schritt 1) zu einem Polyadditionsprodukt durch intermolekulare Umsetzung der Hydroxylgruppen mit den Isocyanatgruppen, wobei zunächst auch mit einer mindestens zwei Hydroxylgruppen, Mercaptogruppen, Aminogruppen oder Isocyanatgruppen enthaltenden Verbindung umgesetzt werden kann,
3) Gegebenenfalls Umsetzung des Polyadditionsproduktes aus Schritt 2) mit einer mindestens zwei Hydroxylgruppen, Mercaptogruppen, Aminogruppen oder Isocyanatgruppen enthaltenden Verbindung.

2. Verfahren nach Anspruch 1, **dadurch gekennzeichnet, dass** in Schritt 1) Diole mit Polyisocyanaten oder Polyole mit Diisocyanaten umgesetzt werden.

3. Verfahren nach Anspruch 1 oder 2, **dadurch gekennzeichnet, dass** die in Schritt 1) eingesetzten Di- oder Polyole aliphatisch sind.

4. Verfahren nach einem der Ansprüche 1 bis 3, **dadurch gekennzeichnet, dass** die in Schritt 1) eingesetzten Di- oder Polyole durch Michael-Addition von mindestens eine primäre oder sekundäre Aminogruppe und mindestens eine Hydroxylgruppe aufweisenden Verbindungen an ethylenisch ungesättigte Verbindungen, die mindestens eine Hydroxylgruppe aufweisen, erhalten werden.

5. Verfahren nach Anspruch 4, **dadurch gekennzeichnet, dass** die ethylenisch ungesättigte Verbindung ausgewählt ist aus (Meth)acrylaten von Diolen oder Polyolen, Vinylallcoholen oder Allylalkoholen.

6. Verfahren nach Anspruch 5, **dadurch gekennzeichnet, dass** die ethylenisch ungesättigte Verbindung ein (Meth)acrylat eines aliphatischen Diols ist, das mit einem aliphatischen Aminoalkohol umgesetzt wird, der eine primäre oder sekundäre Aminogruppe und eine, zwei oder drei Hydroxylgruppen aufweist.

7. Verfahren nach einem der Ansprüche 1 bis 6, **dadurch gekennzeichnet, dass** in Schritt 1) nur oder überwiegend die Hydroxylgruppen der Di- oder Polyole mit der höheren Reaktiviät gegenüber Isocyanatgruppen mit den Isocyanatgruppen umgesetzt werden und in Schritt 2) die Hydroxylgruppen der Di- oder Polyole mit der niedrigeren Reaktivität gegenüber Isocyanatgruppen umgesetzt werden.

8. Dendrimere oder hyperverzweigte Polyurethane, erhältlich nach einem Verfahren gemäß einem der Ansprüche 1 bis 7.

9. Dendrimere oder hyperverzweigte Polyurethane nach Anspruch 8, **dadurch gekennzeichnet, dass** die Polyurethane im Mittel mindestens drei endständige Hydroxyl- und/oder Isocyanatgruppen aufweisen.

10. Verwendung von dendrimeren oder hyperverzweigten Polyurethanen gemäß Anspruch 8 oder 9 als Komponente zur Herstellung von Polyadditions- oder Polykondensationspolymeren, Beschichtungen, Lacken, Überzügen, Klebstoffen, Dichtmassen, Gießelastomeren, Schaumstoffen, als Phasenvermittler, Rheologiehilfsmittel, Thixotropiermittel, Nukleierungsreagenzien oder als Wirkstoff- oder Katalysatorträger.

## Claims

1. A process for preparing dendritic or hyperbranched polyurethanes by
1) reaction of diols or polyols having at least one tertiary nitrogen atom and at least two hydroxyl groups of differing reactivity toward isocyanate groups with diisocyanates or polyisocyanates to form an addition product, where the diols or polyols and diisocyanates or polyisocyanates are selected so that the addition product has on average one isocyanate group and more than one hydroxyl group or one hydroxyl group and more than one isocyanate group,
2) reaction of the addition product from step 1) by intermolecular reaction of the hydroxyl groups with the isocyanate groups to form a polyaddition product, where a reaction with a compound comprising at least two hydroxyl groups, mercapto groups, amino groups or isocyanate groups can also firstly be carried out,
3) optionally reaction of the polyaddition product from step 2) with a compound comprising at least two hydroxyl groups, mercapto groups, amino groups or isocyanate groups.

2. The process according to claim 1, wherein diols are reacted with polyisocyanates or polyols are reacted with diisocyanates in step 1).

3. The process according to claim 1 or 2, wherein the diols or polyols used in step 1) are aliphatic.

4. The process according to any of claims 1 to 3, wherein the diols or polyols used in step 1) are obtained by Michael addition of compounds having at least one primary or secondary amino group and at least one hydroxyl group onto ethylenically unsaturated compounds having at least one hydroxyl group.

5. The process according to claim 4, wherein the ethylenically unsaturated compound is selected from among (meth)acrylates of diols or polyols, vinyl alcohols and allyl alcohols.

6. The process according to claim 5, wherein the ethylenically unsaturated compound is a (meth)acrylate of an aliphatic diol which is reacted with an aliphatic amino alcohol which has one primary or secondary amino group and one, two or three hydroxyl groups.

7. The process according to any of claims 1 to 6, wherein only or predominantly the hydroxyl groups of the diols or polyols having the higher reactivity toward isocyanate groups are reacted with the isocyanate groups in step 1) and the hydroxyl groups of the diols or polyols having the lower reactivity toward isocyanate groups are reacted in step 2).

8. A dendritic or hyperbranched polyurethane which can be obtained by a process according to any of claims 1 to 7.

9. The dendritic or hyperbranched polyurethane according to claim 8, wherein the polyurethane has on average at least three terminal hydroxyl and/or isocyanate groups.

10. The use of a dendritic or hyperbranched polyurethane according to claim 8 or 9 as component for the production of polyaddition or polycondensation polymers, coatings, paints and varnishes, topcoats, adhesives, sealants, pourable elastomers, foams, as phase compatibilizer, rheological auxiliary, thixotrope, nucleating agent or support for active compounds or catalysts.

## Revendications

1. Procédé de fabrication de polyuréthannes dendrimères ou hyperramifiés par
1) réaction de di- ou polyols, qui comportent au moins un atome d'azote tertiaire et au moins deux groupes hydroxyle ayant une réactivité différente vis-à-vis des groupes isocyanate, avec des di- ou polyisocyanates pour former un produit d'addition, les di- ou polyols et les di- ou polyisocyanates étant choisis de manière à ce que le produit d'addition comporte en moyenne un groupe isocyanate et plus d'un groupe hydroxyle ou un groupe hydroxyle et plus d'un groupe isocyanate,
2) réaction du produit d'addition de l'étape 1) pour former un produit de polyaddition par réaction intermoléculaire des groupes hydroxyle avec les groupes isocyanate, une réaction pouvant également tout d'abord être effectuée avec un composé contenant au moins deux groupes hydroxyle, mercapto, amino ou isocyanate,
3) éventuellement réaction du produit de polyaddition de l'étape 2) avec un composé contenant au moins deux groupes hydroxyle, mercapto, amino ou isocyanate.

2. Procédé selon la revendication 1, **caractérisé en ce qu'**à l'étape 1), des diols sont mis en réaction avec des polyisocyanates ou des polyols avec des diisocyanates.

3. Procédé selon la revendication 1 ou 2, **caractérisé en ce que** les di- ou polyols utilisés à l'étape 1) sont aliphatiques.

4. Procédé selon l'une quelconque des revendications 1 à 3, **caractérisé en ce que** les di- ou polyols utilisés à l'étape 1) sont obtenus par addition de Michael de composés comportant au moins un groupe amino primaire ou secondaire et au moins un groupe hydroxyle sur des composés éthyléniquement insaturés qui comportent au moins un groupe hydroxyle.

5. Procédé selon la revendication 4, **caractérisé en ce que** le composé éthyléniquement insaturé est choisi parmi les (méth)acrylates de diols ou de polyols, les alcools vinyliques ou les alcools allyliques.

6. Procédé selon la revendication 5, **caractérisé en ce que** le composé éthyléniquement insaturé est un (méth)acrylate d'un diol aliphatique, qui est mis en réaction avec un aminoalcool aliphatique, qui comporte un groupe amino primaire ou secondaire et un, deux ou trois groupes hydroxyle.

7. Procédé selon l'une quelconque des revendications 1 à 6, **caractérisé en ce qu'**à l'étape 1), seulement ou essentiellement les groupes hydroxyle des di- ou polyols ayant la réactivité la plus élevée vis-à-vis des groupes isocyanate sont mis en réaction avec les groupes isocyanate et, à l'étape 2), les groupes hydroxyle des di- ou polyols ayant la réactivité la plus faible vis-à-vis des groupes isocyanate sont mis en réaction.

8. Polyuréthannes dendrimères ou hyperramifiés, pouvant être obtenus par un procédé selon l'une quelconque des revendications 1 à 7.

9. Polyuréthannes dendrimères ou hyperramifiés selon la revendication 8, **caractérisés en ce que** les polyuréthannes comportent en moyenne au moins trois groupes hydroxyle et/ou isocyanate terminaux.

10. Utilisation de polyuréthannes dendrimères ou hyperramifiés selon la revendication 8 ou 9 en tant que composant pour la fabrication de polymères de polyaddition ou de polycondensation, de revêtements, de laques, de recouvrements, d'adhésifs, de matériaux d'étanchéité, d'élastomères moulés, de mousses, en tant qu'agents de compatibilisation de phases, adjuvants rhéologiques, agents thixotropiques, réactifs de nucléation ou en tant que supports de substances actives ou de catalyseurs.
